(19) Europäisches Patentamt
European Patent Office
Office européen des brevets

(11) Numéro de publication : **0 016 872**
**B1**

(12) # FASCICULE DE BREVET EUROPÉEN

(45) Date de publication du fascicule du brevet : **03.08.83**

(51) Int. Cl.³ : **C 01 G 30/00**// C08K3/22

(21) Numéro de dépôt : **79200164.6**

(22) Date de dépôt : **04.04.79**

(54) **Procédé de fabrication d'un trioxyde d'antimoine photostable.**

(43) Date de publication de la demande :
**15.10.80 Bulletin 80/21**

(45) Mention de la délivrance du brevet :
**03.08.83 Bulletin 83/31**

(84) Etats contractants désignés :
**BE DE FR GB**

(56) Documents cités :
**FR A 850 016**
**FR A 857 234**
**FR A 2 219 904**
**FR A 2 219 905**

(73) Titulaire : **SOCIETE INDUSTRIELLE ET CHIMIQUE DE L'AISNE, société anonyme**
**rue Géo-Lufbéry**
**F-02301 Chauny (FR)**

(72) Inventeur : **Mougin, Gérard**
**Rue du May Caillouel**
**F-02300 Chauny (FR)**

(74) Mandataire : **Bockstael, Marius Florimond Jean et al**
**Arenbergstraat 13**
**B-2000 Anvers (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 016 872 B1

# Procédé de fabrication d'un trioxyde d'antimoine photostable

La présente invention a trait à un procédé permettant d'obtenir un trioxyde d'antimoine photostable. Le composé ainsi obtenu peut avantageusement être appliqué industriellement en tant que charge ignifuge dans des matières plastiques par exemple.

On a déjà proposé des procédés en vue d'obtenir un trioxyde d'antimoine pur, c'est-à-dire exempt des impuretés contenues dans la matière première. La plupart de ces procédés consistaient en l'extraction de l'antimoine de matières plus ou moins complexes, et, ce, par halogénation en phase liquide ou en phase vapeur. Par un traitement classique on pouvait alors transformer l'halogénure d'antimoine en trioxyde d'antimoine se cristallisant substantiellement dans la forme allotropique orthorhombique. Toutefois, cette forme s'est avérée instable à la lumière et on a pu constater une dégradation relativement rapide de la couleur blanche originale. De ce fait, le trioxyde d'antimoine, obtenu par les procédés classiques, ne se prêtait pas à une application industrielle comme charge ignifuge dans des matières plastiques, puisqu'il aurait causé une décoloration graduelle de celles-ci.

Afin de pouvoir remédier à l'instabilité de la forme orthorhombique du trioxyde d'antimoine, obtenu par voie humide classique, on a déjà proposé un premier procédé qui consiste à traiter thermiquement le trioxyde d'antimoine instable de manière à ce qu'il se recristallise dans une forme cristalline stable. Toutefois, ce procédé s'est avéré impropre à une application industrielle, étant donné que, de par le traitement thermique, les propriétés physiques du trioxyde d'antimoine se voyaient préjudiciablement affectées.

Un autre procédé proposait de préparer le trioxyde d'antimoine sous la forme cubique stable, tout en préconisant des conditions de travail (pH, forme de réacteur, densité de pulpe, etc.) très sévères. Ce procédé alternatif s'est avéré efficace en laboratoire, puisqu'on pouvait en effet obtenir que le trioxyde d'antimoine se cristallisait dans la forme cubique stable en phase humide. Toutefois, les tolérances des conditions de travail étaient trop étroites et trop difficilement reproductibles en pratique pour que ce procédé puisse trouver une application industrielle.

La présente invention a pour but de remédier aux inconvénients inhérents aux procédés connus en proposant un procédé de fabrication par voie humide de trioxyde d'antimoine photostable sous la forme orthorhombique pure à partir d'un sel halogéné d'antimoine caractérisé en ce que l'on ajoute audit sel, en tant que réactif ayant une affinité chimique quasiment nulle à l'égard de ce dernier, du CaO et/ou du $CaCO_3$, la température de réaction étant maintenue en dessous de 60 °C, respectivement en dessous de 80 °C dans le cas d'addition de $CaCO_3$ seul.

En effet, la Demanderesse a constaté que le spectre de rayons X du trioxyde d'antimoine, préparé par voie humide selon les procédés classiques, présente, outre les raies spectrales normales intrinsèques de la forme orthorhombique, des raies correspondant aux plans cristallographiques (111), (222) et (400) de la forme cubique. En outre, elle a constaté que, lorsqu'un échantillon du produit susdit est soumis à une exposition prolongée à la lumière, même à basse température, la couleur blanche originale de celui-ci se transformait graduellement en une couleur brune. La Demanderesse a trouvé que cette instabilité à basse température est due aux cristaux cubiques toujours présents dans le produit susdit. Elle a constaté que, après cette dégradation photochimique de l'échantillon, son spectre de rayons X ne présentait plus aucune raie correspondant à la forme cubique. Cette constatation a permis de conclure que la présence d'une quantité minime du trioxyde d'antimoine sous la forme cubique était responsable pour sa dégradation photochimique. En présence de la forme orthorhombique, la forme cubique du trioxyde d'antimoine est donc instable à la lumière à basse température et, sous l'influence de cette lumière, elle se transforme graduellement en forme orthorhombique. Cette transformation graduelle a pour conséquence que l'état de cristallisation du trioxyde d'antimoine se trouve considérablement perturbé, ce qui se manifeste par une altération de son pouvoir réfléchissant, d'où la couleur brune du produit dégradé.

En outre, la Demanderesse a trouvé que, dans les procédés classiques, la vitesse de transformation du sel halogéné d'antimoine en trioxyde d'antimoine a une influence prépondérante sur la stabilité de ce dernier. Elle a, en effet, remarqué que la hauteur des raies du spectre de rayons X correspondant à la forme cubique, c.'est-à-dire l'importance quantitative du trioxyde d'antimoine cubique présent à côté de la forme orthorhombique, est plus importante lorsque ladite vitesse de transformation de l'halogénure en trioxyde est plus grande. On peut donc dire que le trioxyde d'antimoine ainsi obtenu est moins stable lorsque l'halogénure a été transformé en oxyde à une vitesse plus élevée.

Par conséquent, la Demanderesse a d'abord essayé de contrôler la vitesse de transformation en vue d'obtenir le trioxyde d'antimoine photostable par voie humide, évitant ainsi qu'une partie dudit oxyde se cristallise dans le système cubique.

Toutefois, elle a dû constater que l'addition, même très lente, des réactifs utilisés dans les procédés connus, tels que l'ammoniaque ou la soude, n'apporte pas d'amélioration marquante au niveau de la stabilité du produit final.

Lors de nombreux essais, elle a cependant remarqué de manière surprenante que la transformation du sel halogéné en trioxyde peut se faire par une addition, même très rapide, de réactifs moins violents que ceux utilisés dans les procédés connus.

Il est apparu que la stabilité du trioxyde d'antimoine dépend non seulement de la vitesse de

transformation du sel halogéné, mais aussi, et surtout, de l'affinité que présente le réactif utilisé à l'égard dudit sel halogéné. Ainsi, il a été établi que la stabilité de l'oxyde obtenu va en croissant lorsque le caractère basique du réactif employé est plus faible, et ce indépendamment de la vitesse d'addition du réactif.

Selon une exécution pratique, mais non limitative, de l'invention, on peut avantageusement prendre, pour matière de départ, un chlorure ou un oxychlorure d'antimoine, soit sous la forme pure, soit en solution ou en suspension.

Selon l'invention, d'excellents résultats ont été obtenus avec le carbonate de calcium ($CaCO_3$) et avec la chaux ($CaO$).

La vitesse de transformation dépend d'un grand nombre de paramètres, tels que, par exemple, la nature de la matière de départ et des réactifs, la température, la densité de pulpe, etc.

Bien qu'il soit, dès lors, impossible de préconiser d'une manière générale la vitesse de réaction optimale, il y a lieu de respecter, pour des conditions opératoires bien précises, une vitesse maximale limite.

## Exemple

On choisit, comme matière de départ, un oxychlorure d'antimoine auquel on ajoute du $CaCO_3$ et/ou du $CaO$. La densité de pulpe comporte 200 gr/l et l'addition de l'oxychlorure d'antimoine au réacteur se fait simultanément à celle du ou des réactif(s). Le ou les réactif(s) sont ajoutés en excès, de préférence dans une quantité correspondant à 1,5 fois la quantité stœchiométrique.

Sous ces conditions opératoires bien déterminées, et pour un même volume, un même réacteur, une même agitation, etc., la Demanderesse a pu déterminer le temps $t_{\alpha=1}$ correspondant au temps nécessaire pour atteindre un taux de conversion de l'oxychlorure en trioxyde très voisin de la valeur théorique 1, et ce pour des températures bien précises.

| Réactif | Température (°C) | temps $t_{\alpha = 1}$ (min) |
|---|---|---|
| $CaO$ | 60 | 8 |
| $CaO$ | 40 | 12 |
| $CaCO_3$ | 60 | 36 |
| $CaCO_3$ | 80 | 32 |

Ainsi, lorsque la chaux est utilisée en tant que réactif, on ne peut obtenir un trioxyde photostable que lorsque la température est maintenue en dessous de 60 °C. Dans le cas contraire, le trioxyde sera instable.

D'une manière générale on peut représenter les équilibres pouvant s'établir en phase humide par les réactions A et B suivantes :

$$\text{A)}\quad 2SbX_3 + 3H_2O \rightleftharpoons 6HX + 2Sb_2O_3$$

$$\text{B)}\quad Sb_4O_5X_2 + H_2O \rightleftharpoons 2HX + 2Sb_2O_3$$

où X représente l'halogène.

On constate que les réactifs retenus ne réagissent pas directement sur l'halogénure mais sur l'hydracide HX. La consommation de ce dernier composé déplace l'équilibre dans le sens de la formation du trioxyde. La vitesse de la réaction est donc finalement régulée par les équilibres A et B. Dans les procédés antérieurs au contraire les réactions du type :

$$2SbX_3 + 6NaOH \rightarrow Sb_2O_3 + 6NaX + 3H_2O$$

$$Sb_4O_5X_2 + NaOH \rightarrow 2Sb_2O_3 + NaX + HX$$

sont totales et rapides, les équilibres précités ne peuvent s'établir puisque le sel halogéné est directement attaqué.

## Revendications

1. Procédé de fabrication par voie humide de trioxyde d'antimoine photostable sous la forme orthorhombique pure à partir d'un sel halogéné d'antimoine caractérisé en ce que l'on ajoute audit sel, en tant que réactif ayant une affinité chimique quasiment nulle à l'égard de ce dernier, du $CaO$ et/ou du $CaCO_3$, la température de réaction étant maintenue en dessous de 60 °C, respectivement en dessous de 80 °C dans le cas d'addition de $CaCO_3$ seul.

2. Procédé selon la revendication 1, caractérisé en ce que la densité de pulpe est de l'ordre de 200 g/l.

**Claims**

1. Manufacturing process of the wet way type for producing photostable antimony trioxyde in the pure orthorhombic shape going out from an antimony halogen salt, characterized in that one adds to the aforesaid salt, as a reagent with a practically non-existent affinity for the latter, CaO and/or $CaCO_3$, the temperature of the reaction being kept below 60 °C, respectively below 80 °C in the case of the addition of $CaCO_3$ only.

2. Process according to claim 1, characterized in that the density of the pulp is ranging about 200 g/l.

**Ansprüche**

1. Nassverfahren für die Herstellung lichtechten, rein orthorhombischen Antimontrioxyds aus einem Antimonhalogensalz, dadurch gekennzeichnet, dass diesem Antimonhalogensalz Ätzkalk (CaO) bzw. Calciumkarbonat ($CaCO_3$) als Reagenz schwächster chemischer Affinität für dasselbe zugesetzt wird, wobei die Reaktionstemperatur unterhalb 60 °C bzw. unterhalb 80 °C bei ausschliesslicher $CaCO_3$-Zugabe gehalten wird.

2. Verfahren gemäss dem Anspruch 1, dadurch gekennzeichnet dass die Breidichte grössenordnungsgemäss 200 g/l beträgt.